# EUROPEAN PATENT APPLICATION

(11) **EP 4 703 601 A1**
(43) Date of publication of application: **04.03.2026**
(21) Application number: 24796178.2
(22) Date of filing: 25.04.2024
(51) Int. Cl.: F16F 9/516, B60G 13/00

(54) **MOUNTING SEAT OF SHOCK ABSORBER, SHOCK ABSORBER AND VEHICLE**

(30) Priority: 28.04.2023 CN 202321028707 U
(71) Applicant: BYD Company Limited, Shenzhen, Guangdong 518118 (CN)
(72) Inventor: LI, Ben, Shenzhen, Guangdong 518118 (CN); XU, Yitao, Shenzhen, Guangdong 518118 (CN); ZHANG, Derui, Shenzhen, Guangdong 518118 (CN); CAO, Jiawen, Shenzhen, Guangdong 518118 (CN); LI, Zhenghong, Shenzhen, Guangdong 518118 (CN)
(74) Representative: Mathys & Squire
(86) International application number: PCT/CN2024/089822
(87) International publication number: WO 2024/222802

(57) **Abstract**

Provided is a vehicle, including a shock absorber. The shock absorber includes a mounting seat for the shock absorber. The mounting seat for the shock absorber includes a seat body and a mounting housing. The seat body is configured with a main flow channel. The main flow channel is configured to connect to a working cylinder of the shock absorber. The mounting housing is integrally formed with the seat body and is configured with a mounting cavity. The mounting cavity is connected to the main flow channel. The mounting cavity is configured to accommodate an external solenoid valve. The external solenoid valve adjusts a flow rate of fluid between a compression cavity and a rebound cavity through the main flow channel.

## Description

### CROSS-REFERENCE TO RELATED APPLICATIONS

This application claims priority to Chinese Patent Application No. 202321028707.4, filed to the China National Intellectual Property Administration on Friday, April 28, 2023 and entitled "MOUNTING SEAT FOR SHOCK ABSORBER, SHOCK ABSORBER, AND VEHICLE", which is incorporated herein by reference in its entirety.

### TECHNICAL FIELD

This application relates to the technical field of vehicles, and in particular, to a mounting seat for a shock absorber, a shock absorber, and a vehicle.

### BACKGROUND

In related technologies, the mounting seat for a shock absorber generally includes a seat body, a mounting housing, and a solenoid valve. The solenoid valve is an independent integral unit. In addition, the solenoid valve is connected to the seat body of the mounting seat through the mounting housing to fasten the solenoid valve in the shock absorber, and the solenoid valve adjusts the damping force of fluid flow when the shock absorber is under a compression working condition and the damping force of fluid flow when the shock absorber is under a rebound working condition. However, in this way, the quantity of parts of the mounting seat is large, and the mounting housing is generally connected to the seat body by welding. This causes inconvenience in assembly, and further, results in low structural strength of the mounting seat.

### SUMMARY

This application is intended to resolve at least one of the technical problems in the prior art. Therefore, an objective of this application is to provide a mounting seat for a shock absorber. The mounting seat for the shock absorber has advantages of fewer parts, ease in assembly and high structural strength.

This application further provides a shock absorber having the mounting seat for the shock absorber described above.

This application further provides a vehicle having the shock absorber described above.

To achieve the foregoing objective, according to an embodiment of a first aspect of this application, a mounting seat for a shock absorber is provided, including: a seat body, the seat body being configured with a main flow channel, and the main flow channel being configured to connect to a working cylinder of the shock absorber; and a mounting housing, the mounting housing being integrally formed with the seat body and being configured with a mounting cavity, and the mounting cavity being connected to the main flow channel. The mounting cavity is configured to accommodate an external solenoid valve, and the external solenoid valve adjusts a flow rate of fluid between a compression cavity and a rebound cavity of the shock absorber through the main flow channel.

The mounting seat of the shock absorber according to the embodiment of this application has advantages of fewer parts, ease in assembly and high structural strength.

According to some embodiments of this application, the mounting housing includes: a first housing, the first housing being connected to an outer peripheral surface of the seat body, and being provided with a first mounting cavity; and a second housing, the second housing being connected to the outer peripheral surface of the seat body and being provided with a second mounting cavity, and the first housing and the second housing being spaced apart along a circumferential direction of the seat body. The first mounting cavity and the second mounting cavity are both configured to accommodate the external solenoid valve.

According to some embodiments of this application, a central axis of the first housing, a central axis of the second housing, and a central axis of the seat body intersect at a point. The central axis of the first housing and the central axis of the second housing are both perpendicular to the central axis of the seat body. The central axis of the first housing does not overlap the central axis of the second housing.

According to some embodiments of this application, the mounting seat for the shock absorber further includes: a shutoff valve core, the seat body being configured with a shutoff passage and a pipe hole, the shutoff passage being connected to both the main flow channel and the pipe hole, the pipe hole being configured to connect to a hydraulic pump, the shutoff valve core being movably mounted in the shutoff passage, and the shutoff valve core moving in the shutoff passage to control whether the pipe hole communicates with the compression cavity and the rebound cavity of the shock absorber.

According to some embodiments of this application, the seat body is provided with a first pipe hole and a second pipe hole. The first pipe hole is configured to connect to the compression cavity of the shock absorber. The second pipe hole is configured to connect to the rebound cavity of the shock absorber. The first pipe hole and the second pipe hole are configured to connect to the hydraulic pump.

According to some embodiments of this application, the shutoff valve core includes: a first shutoff valve core and a second shutoff valve core. The shutoff passage includes a first shutoff passage and a second shutoff passage. The first shutoff valve core is movably mounted in the first shutoff passage. The second shutoff valve core is movably mounted in the second shutoff passage. The first shutoff passage is connected to both the first pipe hole and the compression cavity. The second shutoff passage is connected to both the second pipe hole and the rebound cavity. The first shutoff valve core moves in the first shutoff passage to control whether the first pipe hole communicates with the compression cavity. The second shutoff valve core moves in the second shutoff passage to control whether the second pipe hole communicates with the rebound cavity.

According to some embodiments of this application, a central axis of the first shutoff passage is perpendicular to a central axis of the first pipe hole and the central axis of the seat body; and a central axis of the second shutoff passage is perpendicular to a central axis of the second pipe hole and the central axis of the seat body.

According to some embodiments of this application, the first shutoff passage and the second shutoff passage are arranged along an axial direction of the seat body; and the first pipe hole and the second pipe hole are arranged along the axial direction of the seat body.

According to some embodiments of this application, the mounting seat for the shock absorber further includes: a first oil injection nozzle and a second oil injection nozzle. The seat body is configured with a first oil injection passage and a second oil injection passage. The first oil injection nozzle is mounted in the first oil injection passage. The second oil injection nozzle is mounted in the second oil injection passage. The first oil injection passage is connected to the first pipe hole. The second oil injection passage is connected to the second pipe hole.

According to some embodiments of this application, a central axis of the first oil injection passage overlaps the central axis of the first pipe hole; and a central axis of the second oil injection passage overlaps the central axis of the second pipe hole.

According to some embodiments of this application, the first oil injection passage and the second oil injection passage are arranged along the axial direction of the seat body; and the first pipe hole and the second pipe hole are arranged along the axial direction of the seat body.

According to an embodiment of a second aspect of this application, a shock absorber is provided, including: the mounting seat for the shock absorber according to the embodiment of the first aspect of this application; a working cylinder, the working cylinder being mounted to the mounting seat; and an external solenoid valve, at least a part of the external solenoid valve being accommodated in the mounting cavity.

The shock absorber according to the embodiment of the second aspect of this application uses the mounting seat for the shock absorber according to the embodiment of the first aspect of this application, and has advantages of fewer parts, ease in assembly and high structural strength.

According to an embodiment of a third aspect of this application, a vehicle is provided, including the mounting seat for the shock absorber according to the embodiment of the first aspect of this application or the shock absorber according to the embodiment of the second aspect of this application.

The vehicle according to the embodiment of the third aspect of this application uses the shock absorber according to the embodiment of the second aspect of this application, and has advantages of fewer parts, ease in assembly and high structural strength.

Additional aspects and advantages of this application will be set forth in part in the following description, and in part will become apparent from the following description, or may be learned through the practice of this application.

### BRIEF DESCRIPTION OF DRAWINGS

The above and/or additional aspects and advantages of this application become apparent and easily understandable from the description of embodiments in conjunction with the following drawings, in which:
FIG. 1 is a diagram of connection of a shock absorber according to an embodiment of this application;
FIG. 2 is a cross-sectional view of a shock absorber according to an embodiment of this application;
FIG. 3 is a diagram of a structure of a seat body of a shock absorber according to an embodiment of this application;
FIG. 4 is a diagram of a structure of a seat body of a shock absorber according to an embodiment of this application from another perspective;
FIG. 5 is a diagram of a structure of a seat body of a shock absorber according to an embodiment of this application from still another perspective;
FIG. 6 is a cross-sectional view of a seat body of a shock absorber according to an embodiment of this application;
FIG. 7 is a cross-sectional view at A-A of FIG. 6;
FIG. 8 is a schematic block diagram of a vehicle according to an embodiment of this application; and
FIG. 9 is a schematic block diagram of a vehicle according to another embodiment of this application.

### Reference numerals:

3: vehicle;
1: shock absorber, 2: mounting seat for a shock absorber;
100: seat body; 110: main flow channel; 111: first flow channel; 112: second flow channel; 113: third flow channel; 114: fourth flow channel; 120: shutoff passage; 121: first shutoff passage; 122: second shutoff passage; 134: pipe hole; 130: first pipe hole; 140: second pipe hole; 150: first oil injection passage; 160: second oil injection passage;
200: mounting housing; 210: mounting cavity; 211: first mounting cavity; 212: second mounting cavity; 220: first housing; 230: second housing;
300: external solenoid valve; 310: first external solenoid valve; 320: second external solenoid valve;
400: cylinder; 410: compression cavity; 420: rebound cavity; 430: compensation cavity; 440: working cylinder; 450: intermediate cylinder; 451: intermediate cavity; 460: oil storage cylinder;
500: piston; 510: piston rod;
600: first one-way valve; 610: second one-way valve;
700: hydraulic pump; 800: energy storage apparatus.

### DESCRIPTION OF EMBODIMENTS

Embodiments described with reference to the accompanying drawings are examples, and the embodiments of this application are described in detail below.

In the description of this application, it will be understood that the directional or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the directional or positional relationships shown in the accompanying drawings, which is only for the purpose of facilitating the description of this application and simplifying the description, and is not intended to indicate or imply that the apparatuses or elements referred to must have specific directions, be constructed and operated in specific directions. Therefore, these terms should not be construed as limiting this application.

In the description of this application, "a first feature" and "a second feature" may include one or more of the features.

In the description of this application, "a plurality of" means two or more.

In the description of this application, the description that the first feature is "above" or "below" the second feature may indicate that the first feature and the second feature are in direct contact, or may indicate that the first feature and the second feature are not in direct contact but are in contact through another feature between the first feature and the second feature.

In the description of this application, the description that the first feature is "above", "over" and "on" the second feature may indicate that the first feature is directly above and obliquely above the second feature, or simply indicate that the first feature is at a higher horizontal level than the second feature.

A mounting seat 2 for a shock absorber according to the embodiment of this application will now be described with reference to the accompanying drawings.

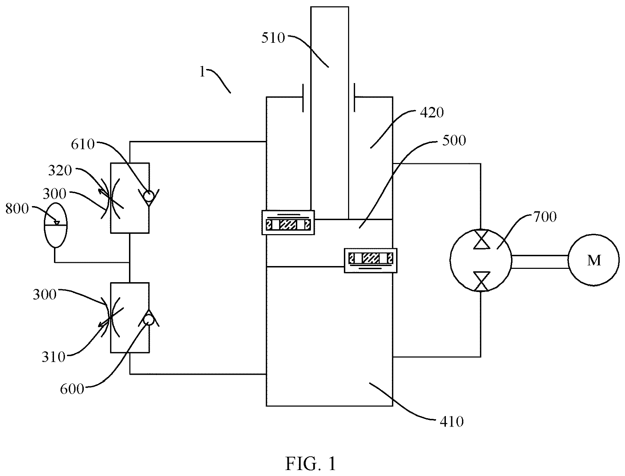

As shown in FIG. 1 to FIG. 7, the mounting seat 2 for the shock absorber according to the embodiment of this application includes a seat body 100 and a mounting housing 200.

The seat body 100 is configured with a main flow channel 110. The main flow channel 110 is configured to connect to a working cylinder 440 of the shock absorber 1, for example, to a rebound cavity 420 and a compression cavity 410 in the working cylinder 440. The mounting housing 200 is integrally formed with the seat body 100 and is configured with a mounting cavity 210. The mounting cavity 210 is connected to the main flow channel 110. The mounting cavity 210 is configured to accommodate an external solenoid valve 300. The external solenoid valve 300 adjusts a flow rate of fluid between the compression cavity 410 and the rebound cavity 420 through the main flow channel 110.

In the mounting seat 2 for the shock absorber according to the embodiment of this application, the seat body 100 is configured with a main flow channel 110. The main flow channel 110 is configured to connect to a working cylinder 440 of the shock absorber 1. The mounting housing 200 is integrally formed with the seat body 100 and is configured with a mounting cavity 210. The mounting cavity 210 is connected to the main flow channel 110. The mounting cavity 210 is configured to accommodate an external solenoid valve 300. The external solenoid valve 300 adjusts a flow rate of fluid between the compression cavity 410 and the rebound cavity 420 through the main flow channel 110. That is, the external solenoid valve 300 may move within the mounting cavity 210 to adjust the damping force of fluid when the shock absorber 1 is under a compression working condition and the damping force of fluid when the shock absorber 1 in under a rebound working condition. In this way, fluid in the compression cavity 410 may flow to the rebound cavity 420 through the external solenoid valve 300 in the mounting cavity 210, or fluid in the rebound cavity 420 may flow to the compression cavity 410 through the external solenoid valve 300 in the mounting cavity 210, thereby adjusting Ni resistance when the shock absorber 1 is under the compression working condition and the rebound working condition, and further, controlling a vehicle body to move up and down.

In addition, the mounting housing 200 is integrally formed with the seat body 100, so that the mounting housing 200 and the seat body 100 may be an integral part. The mounting seat integrates a function of the mounting housing 200, and the external solenoid valve 300 may be directly assembled into the mounting seat 2. In this way, the quantity of parts of the mounting seat 2 may be reduced, and the quantity of parts of the shock absorber 1 may be reduced, helping to reduce manufacturing costs of the shock absorber 1, and facilitating connection and assembly of the external solenoid valve 300 and the mounting seat 2. In addition, the mounting housing 200 is integrally formed with the seat body 100, helping to simplify a structure of the mounting seat 2, and improving connection structural strength between the mounting housing 200 and the seat body 100. The mounting seat 2 is less likely to be damaged, helping to prolong the service life of the shock absorber 1. In addition, the external solenoid valve 300 is fastened in the mounting seat 2 more reliably, and operation of the shock absorber 1 is more stable and reliable.

In this way, the mounting seat 2 for the shock absorber according to the embodiment of this application has advantages of fewer parts, ease in assembly and high structural strength.

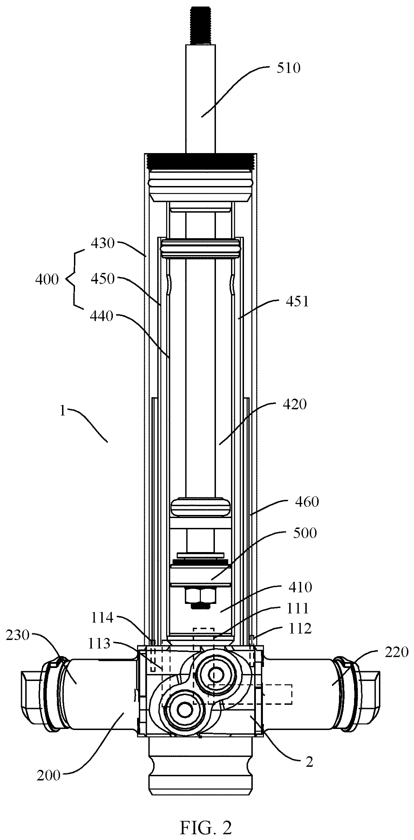

In some specific embodiments of this application, as shown in FIG. 2 to FIG. 6, the mounting housing 200 includes a first housing 220 and a second housing 230.

The first housing 220 is connected to an outer peripheral surface of the seat body 100 and is provided with a first mounting cavity 211. The second housing 230 is connected to the outer peripheral surface of the seat body 100 and is provided with a second mounting cavity 212. The first housing 220 and the second housing 230 are spaced apart along a circumferential direction of the seat body 100. The first mounting cavity 211 and the second mounting cavity 212 are both configured to accommodate the external solenoid valve 300.

In this way, positional interference may not occur between the first housing 220 and the second housing 230 in the circumferential direction of the seat body 100, so that positional interference between the first mounting cavity 211 and the second mounting cavity 212 may be avoided, and structural arrangement is more reasonable. The external solenoid valve 300 in the first mounting cavity 211 can independently adjust the damping force of fluid flowing through the first mounting cavity 211, and the external solenoid valve 300 in the second mounting cavity 212 can independently adjust the damping force of fluid flowing through the second mounting cavity 212.

In addition, the seat body 100, the first housing 220, and the second housing 230 are integrally formed, thereby simplifying a structure of the mounting seat 2, allowing the mounting seat 2 to be an integral part, and further, helping to simplify an assembly step of the shock absorber 1. In addition, structural strength of the mounting seat 2 may be improved, and the mounting seat 2 is less likely to be damaged, helping to prolong the service life of the shock absorber 1. A shock absorption effect is also better.

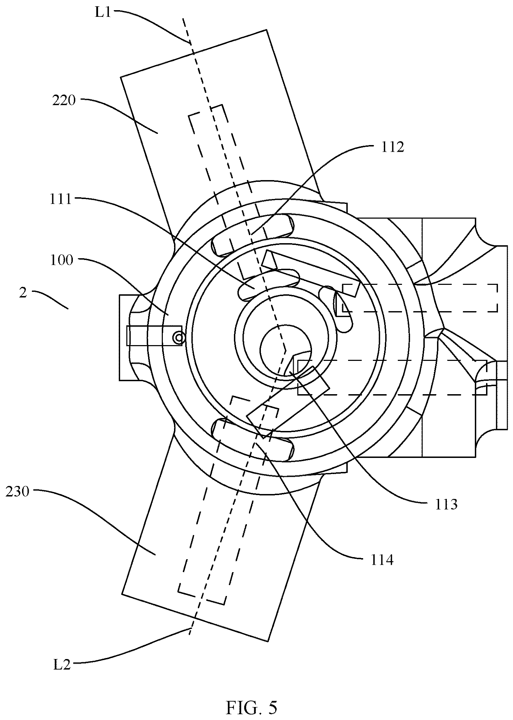

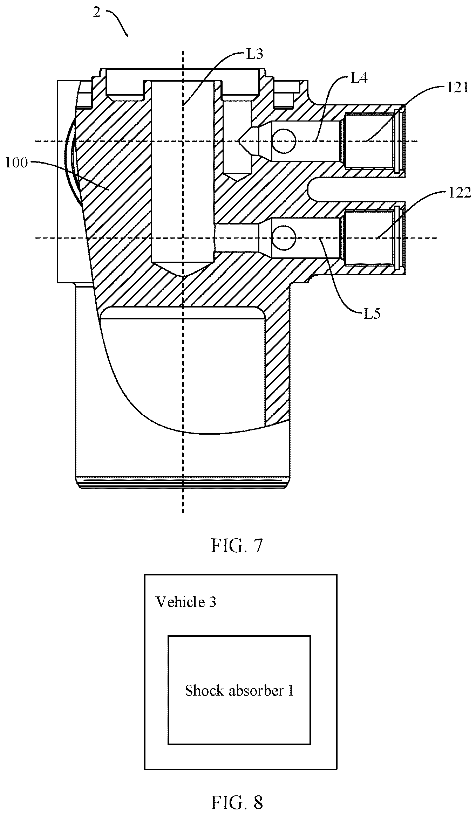

In some specific embodiments of this application, as shown in FIG. 5 and FIG. 7, a central axis L1 of the first housing 220, a central axis L2 of the second housing 230, and a central axis L3 of the seat body 100 intersect at a point. In this way, the central axis L1 of the first housing 220, the central axis L2 of the second housing 230, and the central axis L3 of the seat body 100 intersect at a point. This not only allows the mounting seat 2 to be constructed as a symmetrical structure with a more regular form for easy processing, but also facilitates connection of the first mounting cavity 211 and the second mounting cavity 212 to the rebound cavity 420 and the compression cavity 410 to facilitate flow of fluid in the shock absorber 1.

In addition, the central axis L1 of the first housing 220 and the central axis L2 of the second housing 230 are both perpendicular to the central axis L3 of the seat body 100, thereby helping to simplify the structure of the mounting seat 2. In addition, space occupied by the first housing 220 and the second housing 230 in an axial direction of the seat body 100 may be small, thereby facilitating arrangement and installation.

Further, the central axis L1 of the first housing 220 does not overlap the central axis L2 of the second housing 230. That is, an included angle between the central axis L1 of the first housing 220 and the central axis L2 of the second housing 230 is not equal to 180°, so that sizes of the first housing 220 and the second housing 230 extending along a radial direction of the seat body 100 can be reduced, thereby reducing a radial size of the seat body 100, and facilitating installation and arrangement.

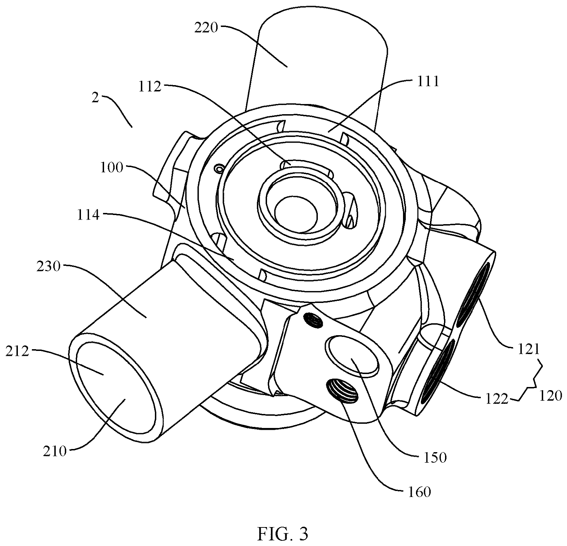

In some specific embodiments of this application, as shown in FIG. 3, FIG. 4, FIG. 6, and FIG. 7, the mounting seat 2 for the shock absorber further includes a shutoff valve core. The seat body 100 is configured with a shutoff passage 120 and a pipe hole 134. The shutoff passage 120 is connected to both the main flow channel 110 and the pipe hole 134.

The shutoff valve core is movably mounted in the shutoff passage 120. The pipe hole 134 is configured to connect to a hydraulic pump 700. The shutoff valve core moves in the shutoff passage 120 to control whether the pipe hole 134 communicates with the compression cavity 410 and the rebound cavity 420.

Therefore, the shutoff valve core may be fastened through the shutoff passage 120. When oil is not required to be supplied to the compression cavity 410 or the rebound cavity 420 through the hydraulic pump 700, that is, when the shock absorber 1 does not need to turn on an active shock absorption, the shutoff valve core may move to control the compression cavity 410 to be disconnected from the rebound cavity 420, so that fluid in the compression cavity 410 and fluid in the rebound cavity 420 do not flow through the hydraulic pump 700. When the shock absorber 1 needs to turn on an active shock absorption function, the shutoff valve core may move to control the pipe hole 134 to communicate with the compression cavity 410 or the rebound cavity 420. In this case, the hydraulic pump 700 may actively pump fluid into the compression cavity 410 or the rebound cavity 420, thereby actively adjusting a height of the vehicle body, and achieving active shock absorption of the vehicle 3.

In some specific embodiments of this application, as shown in FIG. 3 to FIG. 7, the seat body 100 is provided with a first pipe hole 130 and a second pipe hole 140. The first pipe hole 130 is configured to connect to the compression cavity 410 of the shock absorber 1. The second pipe hole 140 is configured to connect to the rebound cavity 420 of the shock absorber 1. The first pipe hole 130 and the second pipe hole 140 are configured to connect to the hydraulic pump 700 through a pipe.

Therefore, the shock absorber 1 may achieve active shock absorption of the shock absorber 1 through the hydraulic pump 700. The shock absorber 1 may change a pressure of oil according to a road condition and a vehicle speed, so that shock of the vehicle body may be rapidly absorbed. While the handling stability of the vehicle 3 is satisfied, the riding comfort of the vehicle 3 may be improved, and driving experience is better.

Specifically, when a motor rotates forward to drive the hydraulic pump 700, the hydraulic pump 700 may pump fluid into the compression cavity 410 through the first pipe hole 130. In this case, an amount of fluid in the compression cavity 410 increases. Further, the hydraulic pump 700 may actively push a piston 500 to move in a direction close to the rebound cavity 420. A volume of the rebound cavity 420 becomes smaller. Fluid in the rebound cavity 420 may flow to the hydraulic pump 700 through the second pipe hole 140, thereby achieving an active rebound working condition of the shock absorber 1.

On the contrary, when the motor rotates in reverse to drive the hydraulic pump 700, the hydraulic pump 700 may pump fluid into the rebound cavity 420 through the second pipe hole 140. In this case, an amount of fluid in the rebound cavity 420 increases. Further, the hydraulic pump 700 may actively push the piston 500 to move in a direction close to the compression cavity 410. A volume of the compression cavity 410 becomes smaller. Fluid in the compression cavity 410 may flow to the hydraulic pump 700 through the first pipe hole 130, thereby achieving an active compression working condition of the shock absorber 1.

It should be noted that the first mounting cavity 211, the second mounting cavity 212, the rebound cavity 420, and the compression cavity 410 form a fluid flow path. The hydraulic pump 700, the rebound cavity 420, and the compression cavity 410 form another oil flow path. That is, fluid flow paths do not interfere with each other when the shock absorber 1 is in an active shock absorption state or a passive shock absorption state.

In some specific embodiments of this application, as shown in FIG. 3, FIG. 4, FIG. 6, and FIG. 7, the shutoff valve core includes a first shutoff valve core and a second shutoff valve core. The shutoff passage 120 includes a first shutoff passage 121 and a second shutoff passage 122.

The first shutoff valve core is movably mounted in the first shutoff passage 121. The second shutoff valve core is movably mounted in the second shutoff passage 122. The first shutoff passage 121 is connected to both the first pipe hole 130 and the compression cavity 410. The second shutoff passage 122 is connected to both the second pipe hole 140 and the rebound cavity 420.

The first shutoff valve core moves relative to the seat body 100, that is, the first shutoff valve core moves in the first shutoff passage 121 to control whether the first pipe hole 130 communicates with the compression cavity 410. The second shutoff valve core moves relative to the seat body 100, that is, the second shutoff valve core moves in the second shutoff passage 122 to control whether the second pipe hole 140 communicates with the rebound cavity 420.

Therefore, when oil is not required to be supplied to the compression cavity 410 or the rebound cavity 420 through the hydraulic pump 700, that is, when the active shock absorption function of the shock absorber 1 is turned off, the first shutoff valve core may control the first pipe hole 130 to be disconnected from the compression cavity 410, and the second shutoff valve core may control the second pipe hole 140 to be disconnected from the rebound cavity 420, so that fluid in the compression cavity 410 and fluid in the rebound cavity 420 do not flow through the hydraulic pump 700, and fluid may flow through the first mounting cavity 211 and the second mounting cavity 212 to perform passive shock absorption. When the shock absorber 1 needs to turn on an active shock absorption function, the first shutoff valve core may control the first pipe hole 130 to communicate with the compression cavity 410, and the second shutoff valve core may control the second pipe hole 140 to communicate with the rebound cavity 420. In this case, the hydraulic pump 700 may actively pump fluid into the compression cavity 410 or the rebound cavity 420, thereby actively adjusting a height of the vehicle body, and achieving active shock absorption of the vehicle 3.

In addition, a circlip may be disposed at an end that is of the first shutoff passage 121 and that faces away from the first pipe hole 130, and a circlip may alternatively be disposed at an end that is of the second shutoff passage 122 and that faces away from the second pipe hole 140. In this way, the circlip may stop the first shutoff valve core in the first shutoff passage 121, and stop the second shutoff valve core in the second shutoff passage 122, effectively preventing the first shutoff valve core and the second shutoff valve core from detaching from the seat body 100.

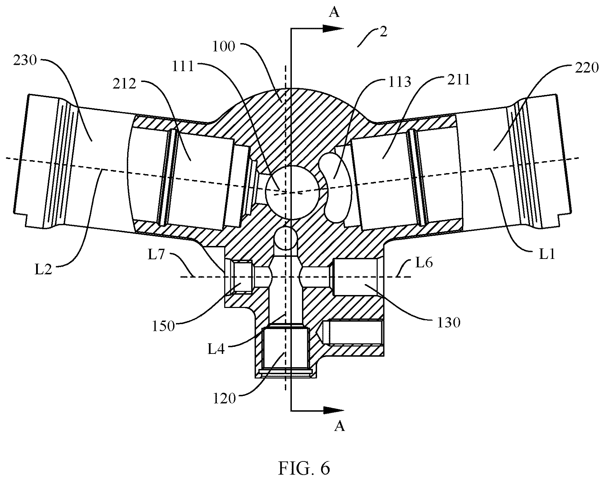

In some specific embodiments of this application, as shown in FIG. 6 and FIG. 7, a central axis L4 of the first shutoff passage 121 is perpendicular to a central axis L6 of the first pipe hole 130 and the central axis L3 of the seat body 100. A central axis L5 of the second shutoff passage 122 is perpendicular to a central axis of the second pipe hole 140 and the central axis L3 of the seat body 100.

In this way, structural arrangement of the first shutoff passage 121 and the first pipe hole 130 and structural arrangement of the second shutoff passage 122 and the second pipe hole 140 may be simplified, thereby facilitating processing of the seat body 100 to reduce a volume of the shock absorber 1, and further, helping to block the first pipe hole 130 by the first shutoff valve core to disconnect the first pipe hole 130 from the compression cavity 410, and to block the second pipe hole 140 by the second shutoff valve core to disconnect the second pipe hole 140 from the rebound cavity 420.

Specifically, when the first pipe hole 130 needs to communicate with the compression cavity 410, the first shutoff valve core may move in a direction away from the central axis L3 of the seat body 100, and the first shutoff valve core may be far away from an end that is of the first pipe hole 130 and that faces the first shutoff passage 121, so that the first pipe hole 130 communicates with the compression cavity 410. When the first pipe hole 130 needs to be disconnected from the compression cavity 410, the first shutoff valve core may move in a direction close to the central axis L3 of the seat body 100, and the first shutoff valve core may block an end that is of the first pipe hole 130 and that faces the first shutoff passage 121, so that the first pipe hole 130 is disconnected from the compression cavity 410.

Similarly, when the second pipe hole 140 needs to communicate with the rebound cavity 420, the second shutoff valve core may move in a direction away from the central axis L3 of the seat body 100, and the second shutoff valve core may be far away from an end that is of the second pipe hole 140 and that faces the second shutoff passage 122, so that the second pipe hole 140 communicates with the rebound cavity 420. When the second pipe hole 140 needs to be disconnected from the rebound cavity 420, the second shutoff valve core may move in a direction close to the central axis L3 of the seat body 100, and the second shutoff valve core may block an end that is of the second pipe hole 140 and that faces the second shutoff passage 122, so that the second pipe hole 140 is disconnected from the rebound cavity 420.

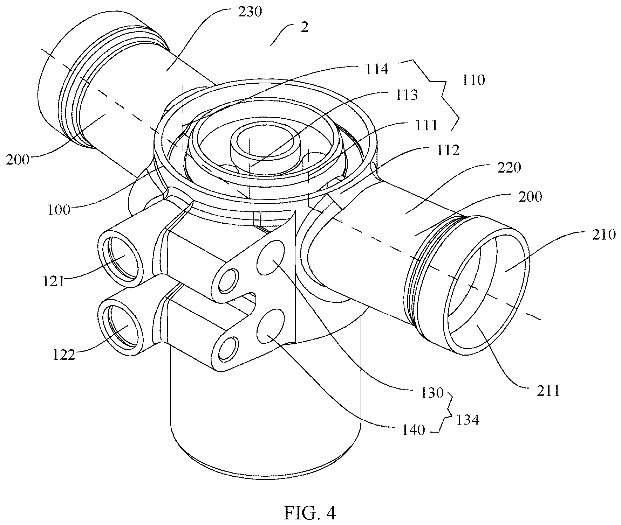

In some specific embodiments of this application, as shown in FIG. 3 and FIG. 4, the first shutoff passage 121 and the second shutoff passage 122 are arranged along the axial direction of the seat body 100. The first pipe hole 130 and the second pipe hole 140 are arranged along the axial direction of the seat body 100.

It may be understood that axial space of the seat body 100 is relatively large. The first shutoff passage 121 and the second shutoff passage 122 are arranged along the axial direction of the seat body 100, so that positional interference between the first shutoff passage 121 and the second shutoff passage 122 and positional interference between the first housing 220 and the second housing 230 may be avoided. In addition, the first pipe hole 130 and the second pipe hole 140 are arranged along the axial direction of the seat body 100, so that positional interference between the first pipe hole 130 and the second pipe hole 140 and positional interference between the first housing 220 and the second housing 230 may be avoided, thereby helping to reduce the radial size of the seat body 100, reducing an overall volume of the shock absorber 1, and facilitating installation.

In addition, it should be noted that the central axis L1 of the first housing 220 does not overlap the central axis L2 of the second housing 230. That is, an included angle between the first housing 220 and the second housing 230 is less than 180° on one side in a radial direction of the seat body 100, and an included angle between the first housing 220 and the second housing 230 may be greater than 180° on the other side in the radial direction of the seat body 100. That is, space on the other side in the radial direction of the seat body 100 may be greater than space on the one side in the radial direction of the seat body 100. In the embodiments of this application, the first pipe hole 130, the second pipe hole 140, the first shutoff passage 121, the second shutoff passage 122, the first oil injection passage 150, and the second oil injection passage 160 may be all provided on the other side in the radial direction of the seat body 100, so that there is sufficient space in a circumferential direction of the seat body 100 to arrange the first pipe hole 130, the second pipe hole 140, the first shutoff passage 121, the second shutoff passage 122, the first oil injection passage 150, and the second oil injection passage 160. In addition, positional interference between the first pipe hole 130 and the second pipe hole 140, positional interference between the first shutoff passage 121 and the second shutoff passage 122, the first oil injection passage 150 and the second oil injection passage 160, and the first housing 220 or the second housing 230 are avoided, and structural arrangement is more reasonable.

In some specific embodiments of this application, as shown in FIG. 3 to FIG. 7, the mounting seat 2 for the shock absorber further includes a first oil injection nozzle and a second oil injection nozzle. The seat body 100 is configured with a first oil injection passage 150 and a second oil injection passage 160.

The first oil injection nozzle is mounted in the first oil injection passage 150. The second oil injection nozzle is mounted in the second oil injection passage 160. The first oil injection passage 150 is connected to the first pipe hole 130. The second oil injection passage 160 is connected to the second pipe hole 140.

In this way, a maintenance man may inject fluid into the hydraulic pump 700 through the first oil injection passage 150 or the second oil injection passage 160 to keep fluid in the shock absorber 1 sufficient, and further to keep a good shock absorption effect of the shock absorber 1. In addition, after oil injection is completed, the first oil injection passage 150 and the second oil injection passage 160 are closed to prevent fluid in the shock absorber 1 from leaking out from the first oil injection passage 150 or the second oil injection passage 160.

In some specific embodiments of this application, as shown in FIG. 6, a central axis L7 of the first oil injection passage 150 overlaps the central axis L6 of the first pipe hole 130. A central axis of the second oil injection passage 160 overlaps the central axis of the second pipe hole 140.

In this way, a structure of the seat body 100 may be simplified, and further, communication between the first oil injection passage 150 and the first pipe hole 130 is smoother. A flow rate of fluid injected from the first oil injection passage 150 into the first pipe hole 130 may be unchanged. Communication between the second oil injection passage 160 and the second pipe hole 140 is smoother. A flow rate of fluid injected from the second oil injection passage 160 into the second pipe hole 140 may be unchanged to facilitate injection of oil into the hydraulic pump 700 through the first oil injection passage 150 and the second oil injection passage 160.

In some specific embodiments of this application, as shown in FIG. 3, FIG. 4, and FIG. 7, the first oil injection passage 150 and the second oil injection passage 160 are arranged along the axial direction of the seat body 100. The first pipe hole 130 and the second pipe hole 140 are arranged along the axial direction of the seat body 100.

It may be understood that axial space of the seat body 100 is relatively large. The first oil injection passage 150 and the second oil injection passage 160 are arranged along the axial direction of the seat body 100, so that positional interference between the first oil injection passage 150 and the second oil injection passage 160 and positional interference between the first housing 220 and the second housing 230 may be avoided. In addition, the first pipe hole 130 and the second pipe hole 140 are arranged along the axial direction of the seat body 100, so that positional interference between the first pipe hole 130 and the second pipe hole 140 and positional interference between the first housing 220 and the second housing 230 may be avoided, thereby helping to reduce the radial size of the seat body 100, reducing an overall volume of the shock absorber 1, and facilitating installation.

In some specific embodiments of this application, the seat body 100 is provided with an oil injection passage and a pipe hole 134. The oil injection passage is configured to connect to an external oil injection apparatus. The pipe hole 134 is configured to connect to an external hydraulic pump 700. A shutoff valve core is mounted in the seat body 100. The shutoff valve core is connected to both the oil injection passage, the pipe hole 134, and the working cylinder 440. The shutoff valve core is configured to connect or disconnect communication between the oil injection passage and the working cylinder 440, and the shutoff valve core is configured to connect or disconnect communication between the pipe hole 134 and the working cylinder 440. In this way, the oil injection passage and the pipe hole 134 are integrated into the seat body 100, thereby improving a degree of integration, and facilitating replenishment of oil into the hydraulic pump 700.

A shock absorber 1 according to the embodiment of this application will now be described with reference to the accompanying drawings. The shock absorber 1 includes the mounting seat 2 for the shock absorber, the cylinder 400, the piston 500, and the external solenoid valve 300 according to the foregoing embodiment of this application.

The cylinder 400 is mounted in the mounting seat 2. The piston 500 is movably mounted in the cylinder 400, and the rebound cavity 420 and the compression cavity 410 are separated in the cylinder 400. At least a part of the external solenoid valve 300 is accommodated in the mounting cavity 210. In this way, the external solenoid valve 300 may adjust the damping force of fluid when the shock absorber 1 is under a compression working condition and the damping force of fluid when the shock absorber 1 in under a rebound working condition, so that fluid in the compression cavity 410 may flow to the rebound cavity 420 through the external solenoid valve 300 in the mounting cavity 210, or fluid in the rebound cavity 420 may flow to the compression cavity 410 through the external solenoid valve 300 in the mounting cavity 210, thereby adjusting damping forces when the shock absorber 1 is under the compression working condition and the rebound working condition, and further, controlling a vehicle body to move up and down.

The shock absorber 1 according to the embodiment of this application uses the mounting seat 2 for the shock absorber according to the embodiment of this application, and has advantages of fewer parts, ease in assembly and high structural strength.

In some specific embodiments of this application, as shown in FIG. 1 to FIG. 4, the cylinder 400 is provided with a compensation cavity 430. The mounting cavity 210 includes a first mounting cavity 211 and a second mounting cavity 212. The external solenoid valve 300 includes a first external solenoid valve 310 and a second external solenoid valve 320.

The first mounting cavity 211 communicates with both the compression cavity 410 and the compensation cavity 430. The second mounting cavity 212 communicates with both the rebound cavity 420 and the compensation cavity 430. The first external solenoid valve 310 is movably disposed in the first mounting cavity 211 to adjust a flow rate of fluid between the compensation cavity 430 and the compression cavity 410. The second external solenoid valve 320 is movably disposed in the second mounting cavity 212 to adjust flow rate of fluid between the rebound cavity 420 and the compensation cavity 430.

The compensation cavity 430 may be connected to an energy storage apparatus 800. The energy storage apparatus 800 may be mounted in the shock absorber 1. Alternatively, the energy storage apparatus 800 may be mounted outside the shock absorber 1, but communicates with the compensation cavity 430 through a pipe. Alternatively, the energy storage apparatus 800 may be mounted outside the shock absorber 1, but communicates with the compensation cavity 430 through the seat body 100.

It may be understood that, when the shock absorber 1 is under a compression working condition, a piston rod 510 of the piston 500 enters the cylinder 400, thereby reducing a total volume of the cylinder 400. In this case, fluid in the compression cavity 410 flows through the compensation cavity 430 when flowing from the compression cavity 410 to the rebound cavity 420. Therefore, a volume of the compensation cavity 430 may be reduced to increase the total volume of the cylinder 400, thereby compensating for a change of volume of the cylinder 400 when the piston rod 510 enters the cylinder 400, keeping the total volume of the cylinder 400 constant, and causing the shock absorber 1 to work more stably. When the shock absorber 1 is under a rebound working condition, the piston rod 510 of the piston 500 exits the cylinder 400, thereby increasing the total volume of the cylinder 400. In this case, fluid in the rebound cavity 420 also flows through the compensation cavity 430 when flowing from the rebound cavity 420 to the compression cavity 410. Therefore, the volume of the compensation cavity 430 may be increased to reduce the total volume of the cylinder 400, thereby compensating for change of the volume of the cylinder 400 when the piston rod 510 exits the cylinder 400, keeping the total volume of the cylinder 400 constant, and causing the shock absorber 1 to work more stably.

In some specific embodiments of this application, as shown in FIG. 1, the mounting seat 2 for the shock absorber further includes a first one-way valve 600 and a second one-way valve 610.

The first one-way valve 600 is connected to both the compression cavity 410 and the compensation cavity 430, and is connected in parallel to the first external solenoid valve 310. The first one-way valve 600 only allows fluid to flow from the compensation cavity 430 to the compression cavity 410 through the first one-way valve 600. The second one-way valve 610 is connected to both the rebound cavity 420 and the compensation cavity 430, and is connected in parallel to the second external solenoid valve 320. The second one-way valve 610 only allows fluid to flow from the compensation cavity 430 to the rebound cavity 420 through the second one-way valve 610.

Therefore, the first one-way valve 600 may prevent fluid from flowing from the compression cavity 410 to the compensation cavity 430. The fluid flowing from the compression cavity 410 to the compensation cavity 430 only flows through the first external solenoid valve 310. Similarly, the second one-way valve 610 may prevent fluid from flowing from the rebound cavity 420 to the compensation cavity 430. The fluid flowing through the rebound cavity 420 to the compensation cavity 430 only flows through the second external solenoid valve 320. In addition, it may be understood that, on a connection flow path between the compression cavity 410 and the rebound cavity 420, the first external solenoid valve 310 and the second one-way valve 610 are connected in series, and the second external solenoid valve 320 and the first one-way valve 600 are connected in series.

Therefore, when the shock absorber 1 is under a compression working condition, fluid in the compression cavity 410 may flow to the rebound cavity 420 through the first external solenoid valve 310, the compensation cavity 430, and the second one-way valve 610 in sequence. When the shock absorber 1 is under a rebound working condition, fluid in the rebound cavity 420 may flow to the compression cavity 410 through the second external solenoid valve 320, the compensation cavity 430, and the first one-way valve 600 in sequence. In this way, the first one-way valve 600 and the second one-way valve 610 are disposed, so that fluid flow paths may be separated under different working conditions of the shock absorber 1, to achieve independent control of the shock absorber 1 under two working conditions, help improve a response rate of the shock absorber 1, expand an adjustable range of the damping force of the shock absorber 1, and balance handling stability and safety of the vehicle 3 better.

In addition, it should be noted that the first external solenoid valve 310 and the first one-way valve 600 may be disposed in parallel in the first mounting cavity 211. The second external solenoid valve 320 and the second one-way valve 610 may be disposed in parallel in the second mounting cavity 212.

In some specific embodiments of this application, as shown in FIG. 2, the cylinder 400 is provided with an intermediate cavity 451. The intermediate cavity 451 communicates with the rebound cavity 420. The main flow channel 110 includes a first flow channel 111, a second flow channel 112, a third flow channel 113, and a fourth flow channel 114.

The first mounting cavity 211 communicates with the compression cavity 410 through the first flow channel 111. The first mounting cavity 211 communicates with the compensation cavity 430 through the second flow channel 112. The second mounting cavity 212 communicates with the intermediate cavity 451 through the third flow channel 113. The second mounting cavity 212 communicates with the compensation cavity 430 through the fourth flow channel 114.

Therefore, when the shock absorber 1 is under the compression working condition, the fluid in the compression cavity 410 may flow to the intermediate cavity 451 through the first flow channel 111, the first mounting cavity 211, the second flow channel 112, the compensation cavity 430, the fourth flow channel 114, the second mounting cavity 212, and the third flow channel 113 in sequence, and may further flow to the rebound cavity 420. In this case, the volume of the compensation cavity 430 may be reduced to compensate for a volume error of the cylinder 400. When the shock absorber 1 is under the rebound working condition, the fluid in the rebound cavity 420 may flow to the compression cavity 410 through the intermediate cavity 451, the third flow channel 113, the second mounting cavity 212, the fourth flow channel 114, the compensation cavity 430, the second flow channel 112, the first mounting cavity 211, and the first flow channel 111 in sequence. In this case, the volume of the compensation cavity 430 may be increased to compensate for the volume error of the cylinder 400.

In addition, the first flow channel 111, the second flow channel 112, the third flow channel 113, and the fourth flow channel 114 are all integrated into the seat body 100, thereby reducing the volume of the seat body 100, and further, helping to communicate the first mounting cavity 211 with both the compression cavity 410 and the compensation cavity 430 and communicate the second mounting cavity 212 with both the intermediate cavity 451 and the compensation cavity 430. In addition, flow path interference may not occur between. Structural arrangement is more reasonable.

In some specific embodiments of this application, as shown in FIG. 2, the cylinder 400 includes a working cylinder 440, an intermediate cylinder 450, and an oil storage cylinder 460.

The piston 500 is movably mounted in the working cylinder 440, and the compression cavity 410 and the rebound cavity 420 are separated in the working cylinder 440. The intermediate cylinder 450 is sleeved outside the working cylinder 440, and an intermediate cavity 451 is defined between the intermediate cylinder 450 and the working cylinder 440. The oil storage cylinder 460 is sleeved outside the intermediate cylinder 450, and a compensation cavity 430 is defined between the oil storage cylinder 460 and the intermediate cylinder 450.

For example, the cylinder 400 may be connected to a vehicle body. The piston 500 may be connected to a wheel. When the shock absorber 1 is under the compression working condition, the fluid in the compression cavity 410 flows to the rebound cavity 420, so that the piston 500 may move downward relative to the cylinder 400, thereby raising a height of the vehicle body. When the shock absorber 1 is under the rebound working condition, the fluid in the rebound cavity 420 flows to the compression cavity 410, so that the piston 500 moves upward relative to the cylinder 400, thereby lowering the height of the vehicle body.

That is, fluid in the cylinder 400 is mainly present in the compression cavity 410 and the rebound cavity 420 to adjust the height of the vehicle body. Therefore, a volume of the working cylinder 440 may be larger than the volume of the compensation cavity 430. In this way, the piston 500 moves to adjust a volume ratio of the compression cavity 410 and a volume ratio of the rebound cavity 420, so that a height of the vehicle body may be adjusted, and a height adjustment range of the vehicle body is relatively large. The volume of the compensation cavity 430 configured by the oil storage cylinder 460 and the intermediate cylinder 450 is changed to increase or reduce a total volume that is in the cylinder 400 and that is used for accommodating fluid, thereby keeping the total volume that is in the cylinder 400 and that is used for accommodating fluid unchanged, reducing a volume error, causing the shock absorber 1 to have a smaller error and a better shock absorption effect, and balancing handling stability and safety of the vehicle 3 better.

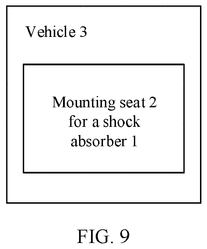

A vehicle 3 according to the embodiment of this application will now be described with reference to the accompanying drawings. The vehicle 3 includes the mounting seat 2 for the shock absorber 1 according to the foregoing embodiment of this application or the shock absorber 1 according to the foregoing embodiment of this application, as shown in FIG. 8 and FIG. 9.

The vehicle 3 according to the embodiment of this application uses the mounting seat 2 for the shock absorber 1 or the shock absorber 1 according to the foregoing embodiment of this application, and has advantages of fewer parts, ease in assembly and high structural strength.

Other structures and operations of the mounting seat 2 for the shock absorber, the shock absorber 1, and the vehicle 3 having the same according to the embodiment of this application are known to a person of ordinary skill in the art, which will not be described in detail herein.

In the description of this specification, descriptions referring to the terms "one embodiment", "some embodiments", "exemplary embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example.

Although the embodiments of this application have been shown and described, a person of ordinary skill in the art will appreciate that various changes, modifications, substitutions, and variations may be made to the embodiments without departing from the principle and spirit of this application. The scope of this application is defined by the claims and their equivalents.

## Claims

1. A mounting seat (2) for a shock absorber (1), comprising:
a seat body (100), the seat body (100) being configured with a main flow channel (110), and the main flow channel (110) being configured to connect to a working cylinder (440) of the shock absorber (1); and
a mounting housing (200), the mounting housing (200) being integrally formed with the seat body (100) and being configured with a mounting cavity (210), and the mounting cavity (210) being connected to the main flow channel (110), wherein
the mounting cavity (210) is configured to install an external solenoid valve (300), and the external solenoid valve (300) adjusts a flow rate of fluid between a compression cavity (410) and a rebound cavity (420) of the shock absorber (1) through the main flow channel (110).

2. The mounting seat (2) for the shock absorber (1) according to claim 1, wherein the mounting housing (200) comprises:
a first housing (220), the first housing (220) being connected to an outer peripheral surface of the seat body (100), and being provided with a first mounting cavity (211); and
a second housing (230), the second housing (230) being connected to the outer peripheral surface of the seat body (100) and being provided with a second mounting cavity (212), and the first housing (220) and the second housing (230) being spaced apart along a circumferential direction of the seat body (100), wherein
the first mounting cavity (211) and the second mounting cavity (212) are configured to accommodate the external solenoid valve (300).

3. The mounting seat (2) for the shock absorber (1) according to claim 2, wherein a central axis of the first housing (220), a central axis of the second housing (230), and a central axis of the seat body (100) intersect at a point, the central axis of the first housing (220) and the central axis of the second housing (230) are both perpendicular to the central axis of the seat body (100), and the central axis of the first housing (220) does not overlap the central axis of the second housing (230).

4. The mounting seat (2) for the shock absorber (1) according to any one of claims 1 to 3, further comprising:
a shutoff valve core, the seat body (100) being configured with a shutoff passage (120) and a pipe hole (134), the shutoff passage (120) being connected to both the main flow channel (110) and the pipe hole (134), the shutoff valve core being movably mounted in the shutoff passage (120), the pipe hole (134) being configured to connect to a hydraulic pump (700), and the shutoff valve core moving in the shutoff passage (120) to control whether the pipe hole (134) communicates with the compression cavity (410) and the rebound cavity (420) of the shock absorber (1).

5. The mounting seat (2) for the shock absorber (1) according to claim 4, wherein the seat body (100) is provided with a first pipe hole (130) and a second pipe hole (140), the first pipe hole (130) is configured to connect to the compression cavity (410) of the shock absorber (1), the second pipe hole (140) is configured to connect to the rebound cavity (420) of the shock absorber (1), and the first pipe hole (130) and the second pipe hole (140) are configured to connect to the hydraulic pump (700).

6. The mounting seat (2) for the shock absorber (1) according to claim 5, wherein the shutoff valve core comprises:
a first shutoff valve core and a second shutoff valve core, the shutoff passage (120) comprising a first shutoff passage (121) and a second shutoff passage (122), the first shutoff valve core being movably mounted in the first shutoff passage (121), the second shutoff valve core being movably mounted in the second shutoff passage (122), the first shutoff passage (121) being connected to both the first pipe hole (130) and the compression cavity (410), and the second shutoff passage (122) being connected to both the second pipe hole (140) and the rebound cavity (420), wherein
the first shutoff valve core moves in the first shutoff passage (121) to control whether the first pipe hole (130) communicates with the compression cavity (410); and
the second shutoff valve core moves in the second shutoff passage (122) to control whether the second pipe hole (140) communicates with the rebound cavity (420).

7. The mounting seat (2) for the shock absorber (1) according to claim 6, wherein a central axis of the first shutoff passage (121) is perpendicular to a central axis of the first pipe hole (130) and the central axis of the seat body (100); and
a central axis of the second shutoff passage (122) is perpendicular to a central axis of the second pipe hole (140) and the central axis of the seat body (100).

8. The mounting seat (2) for the shock absorber according to claim 6 or 7, wherein the first shutoff passage (121) and the second shutoff passage (122) are arranged along an axial direction of the seat body (100); and
the first pipe hole (130) and the second pipe hole (140) are arranged along the axial direction of the seat body (100).

9. The mounting seat (2) for the shock absorber (1) according to any one of claims 5 to 8, further comprising:
a first oil injection nozzle and a second oil injection nozzle, the seat body (100) being configured with a first oil injection passage (150) and a second oil injection passage (160), the first oil injection nozzle being mounted in the first oil injection passage (150), the second oil injection nozzle being mounted in the second oil injection passage (160), the first oil injection passage (150) being connected to the first pipe hole (130), and the second oil injection passage (160) being connected to the second pipe hole (140).

10. The mounting seat (2) for the shock absorber (1) according to claim 9, wherein a central axis of the first oil injection passage (150) overlaps the central axis of the first pipe hole (130); and
a central axis of the second oil injection passage (160) overlaps the central axis of the second pipe hole (140).

11. The mounting seat (2) for the shock absorber according to claim 9 or 10, wherein the first oil injection passage (150) and the second oil injection passage (160) are arranged along the axial direction of the seat body (100); and
the first pipe hole (130) and the second pipe hole (140) are arranged along the axial direction of the seat body (100).

12. A shock absorber (1), comprising:
the mounting seat (2) for the shock absorber according to any one of claims 1 to 11;
a working cylinder (440), the working cylinder (440) being mounted to the mounting seat (2); and
an external solenoid valve (300), at least a part of the external solenoid valve (300) being accommodated in the mounting cavity (210).

13. A vehicle (3), comprising the mounting seat (2) for the shock absorber according to any one of claims 1 to 11 or the shock absorber (1) according to claim 12.
